# EUROPEAN PATENT APPLICATION

(11) **EP 3 901 878 A1**
(43) Date of publication of application: **27.10.2021**
(21) Application number: 21157227.6
(22) Date of filing: 15.02.2021
(51) Int. Cl.: G06Q 20/20, G07G 1/00, G07G 1/01

(54) **COMMODITY READING DEVICE AND COMMODITY READING METHOD**

(30) Priority: 24.03.2020 JP 2020053371
(71) Applicant: Toshiba TEC Kabushiki Kaisha, Tokyo 141-8562 (JP)
(72) Inventor: Yamashita, Koudai, Shinagawa-ku, Tokyo 141-8562 (JP)
(74) Representative: Bandpay & Greuter

(57) **Abstract**

According to one embodiment, a commodity reading device includes a hand-held scanner configured to read a code symbol on a commodity, a fixed scanner configured to read a code symbol on a commodity by capturing an image of the code symbol, and a processor. The processor is configured to detect the code symbol in the image captured by the fixed scanner, extract commodity information for identifying the commodity from the detected code symbol, and provide a notification to a user when a time between the detection of the code symbol and the extracting of the commodity information exceeds a preset threshold length of time, the notification indicating that the hand-held scanner is available to read the code symbol.

## Description

### FIELD

Embodiments described herein relate generally to a commodity reading device and a commodity reading method.

### BACKGROUND

In the related art, reading devices that read commodity information from code symbols, such as barcodes, attached to commodities are used in retail stores such as supermarkets. Such a reading device can include a plurality of different scanners, each of which can read the code symbols.

Thus, when one scanner fails to read a code symbol due to scanner breakdown, the code symbol can usually be read with another one of the scanners of the reading device. However, when an operator (e.g., customer) is not aware of the availability the other scanner, operator cannot read the code symbol using the reading device.

### DESCRIPTION OF THE DRAWINGS

FIG. 1 is a perspective view illustrating an example of a self-POS terminal according to an embodiment.
FIG. 2 is a block diagram of a self-POS terminal according to an embodiment.
FIG. 3 is a block diagram functional aspects of a self-POS terminal according to an embodiment.
FIG. 4 is a diagram illustrating an example of a notification screen.
FIG. 5 is a flowchart of a first commodity registration process performed by a self-POS terminal according to an embodiment.
FIG. 6 is a flowchart of a second commodity registration process performed by a self-POS terminal according to an embodiment.

### DETAILED DESCRIPTION

According to the present invention, there is provided a commodity reading device and a commodity reading method capable of guiding an operator to utilize another reading method when one fails.

According to one embodiment, a commodity reading device includes a hand-held scanner configured to read a code symbol on a commodity, a fixed scanner configured to read a code symbol on a commodity by capturing an image of the code symbol, and a processor. The processor is configured to detect the code symbol in the image captured by the fixed scanner, extract commodity information for identifying the commodity from the detected code symbol, and provide a notification to a user when a time between the detection of the code symbol and the extracting of the commodity information exceeds a preset threshold length of time, the notification indicating that the hand-held scanner is available to read the code symbol.

The commodity reading device may further comprise a display screen.

The notification provided by the processor may causes the display screen to display a message to the user.

The commodity reading device may further comprise a signal lamp.

The notification provided by the processor may further cause the signal lamp to signal a malfunction of the fixed scanner.

The commodity reading device may further comprise a memory configured to store a flag value indicating a previous failure of the extraction of the commodity information.

Preferably, the processor is further configured to provide a notification, based on the stored flag value, to a user in a subsequent transaction indicating that the fixed scanner is inoperable and the hand-held scanner is available for reading a code symbol.

Preferably, the processor is further configured to register a commodity for sale in a sales transaction based on commodity information extracted from a code symbol.

The present invention further relates to a self-service point-of-sales terminal, comprising a display screen configured to be viewed by a customer registering items in a sales transaction; and a commodity reading device. In this self-service point-of-sales terminal, the processor is further configured to provide a notification on the display screen when a time between the detection of the code symbol and the extracting of the commodity information exceeds a preset threshold length of time, the notification indicating that the hand-held scanner is available to read the code symbol.

The self-service point-of-sales terminal may further comprise a card reader/writer for receiving transaction settlement payments from the customer.

The present invention further relates to a commodity reading method for a commodity device with a fixed scanner and a hand-held scanner. The method may comprise capturing an image of a code symbol on a commodity using a fixed scanner, detecting the code symbol in the captured image, attempting to extract commodity information for identifying the commodity from the detected code symbol detected and provide a notification to a user when a time between the detection of the code symbol and the extracting of the commodity information exceeds a preset threshold length of time, the notification indicating that a hand-held scanner is available to read the code symbol.

Preferably, the notification is displayed on a display screen of the commodity reading device.

The commodity reading method may further comprise causing a signal lamp to signal a malfunction of the fixed scanner when the notification is provided.

The commodity reading method may further comprise storing a flag value indicating a previous failure of the extraction of the commodity information.

The commodity reading method may further comprise providing a notification, based on the stored flag value, to a user in a subsequent transaction indicating that the fixed scanner is inoperable and the hand-held scanner is available for reading a code symbol.

The commodity reading method may further comprise registering a commodity for sale in a sales transaction based on commodity information extracted from a code symbol.

Hereinafter, an example embodiment of a reading device and a control program for execution on a reading device will be described with reference to the drawings. The example embodiments described below are only examples and do not limit the present disclosure.

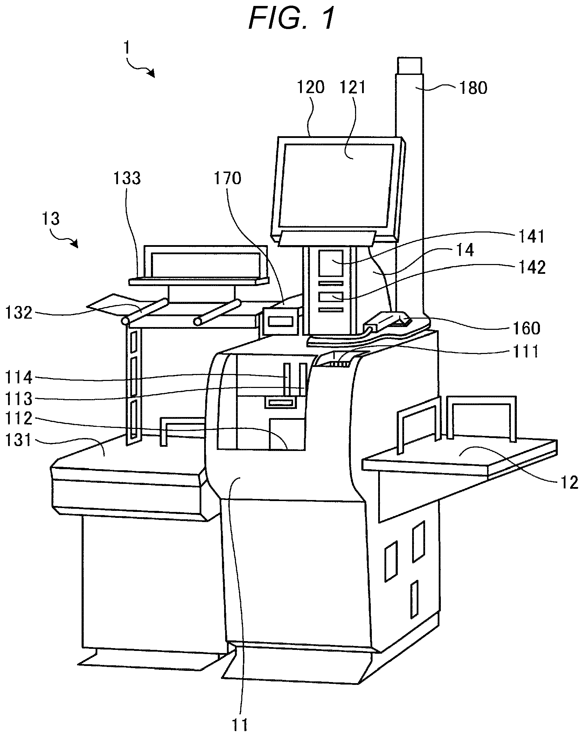

FIG. 1 is a perspective view illustrating an example of a self-point of sales (POS) terminal 1 according to an embodiment. The self-POS terminal 1 is a device that performs a commodity registration process of registering sales target commodities and an accounting process for the commodities registered through the commodity registration process by a customer's operation. The self-POS terminal 1 can be considered a commodity reading device (for simplicity, "reading device") that reads a code symbol, such as a barcode or a 2-dimensional code, attached to a commodity being registered for purchase or the like.

The self-POS terminal 1 includes a first casing 11. The self-POS terminal 1 includes a first load stand 12 on which a shopping basket or the like can be placed on the right side (in the drawing) of the first casing 11. The self-POS terminal 1 includes a second load stand 13 on which the commodities already registered as sales target commodities are to be placed on the left side (in the drawing) of the first casing 11.

The second load stand 13 includes a pedestal 131 on which commodities registered as sales target commodities are put. The second load stand 13 includes a bag hook 132 that can be used to suspend bags into which the registered commodities can be placed and a temporary stand 133 for the already registered commodities.

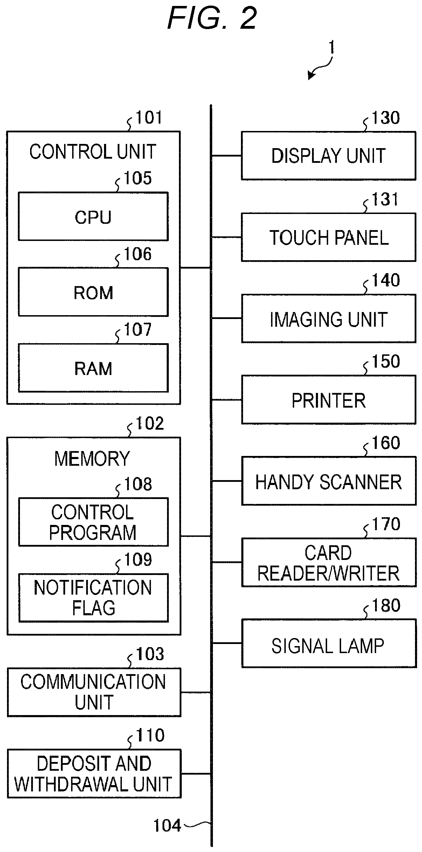

The first casing 11 contains a deposit and withdrawal unit 110 (see FIG. 2). The deposit and withdrawal unit 110 stores money therein. The deposit and withdrawal unit 110 receives customer payments and provides change due back to the customer.

The first casing 11 includes a coin input port 111, a coin discharge port 112, a paper money input port 113, and a paper money discharge port 114. The coin input port 111 is a deposit port for coins deposited to the deposit and withdrawal unit 110 by a customer as payment for commodities or the like. The coin discharge port 112 is a withdrawal port by which coins are provided as change from the deposit and withdrawal unit 110. The paper money input port 113 is a deposit port for paper money deposited to the deposit and withdrawal unit 110 by a customer as payment for commodities or the like. The paper money discharge port 114 is a withdrawal port by which paper money is provided as change from the deposit and withdrawal unit 110.

The self-POS terminal 1 includes a second casing 14 on the upper surface of the first casing 11. The second casing 14 supports a display unit 120 provided in or on the upper portion of the second casing 14.

The display unit 120 is, for example, a liquid crystal display. The display unit 120 displays commodity information regarding commodities registered for sales. The display unit 120 includes a touch panel 121 for operating the self-POS terminal 1. The touch panel 121 detects a spot operated (touched) on the display unit 120 and determines that an operation is input in accordance with a display element displayed by the display unit 120 at the touched position. Thus, the touch panel 121 receives an operation on a key when the key displayed by the display unit 120 is operated.

The second casing 14 includes a reading window 141 and a receipt discharge portion 142 on the front side. The reading window 141 is formed of a transparent plate through which light can be transmitted. The second casing 14 includes an imaging unit 140 inside the reading window 141.

The imaging unit 140 is a camera that includes an image sensor such as a complementary metal-oxide semiconductor (CMOS) or a charge coupled device (CCD). That is, the imaging unit 140 images a commodity held up to the reading window 141. Thus, the imaging unit 140 operates to read a code symbol, such as a barcode or a 2-dimensional code, attached to the commodity held up to the reading window 141. In other words, the imaging unit 140 is a stationary scanner that reads a code symbol.

The second casing 14 contains a printer 150 (see FIG. 2). The printer 150 prints a receipt on which details regarding the items, prices, payments, and the like for a transaction are printed. The receipt discharge portion 142 discharges the receipt as printed by the printer 150.

The self-POS terminal 1 includes a handy scanner 160, a card reader/writer 170, and a signal lamp 180.

The handy scanner 160 is a handheld scanner. The handy scanner 160 emits laser light to read/scan a code symbol. The handy scanner 160 reads the code symbol by receiving reflected laser light from the code symbol. The handy scanner 160 is not limited to a type of scanner in which laser light is used and may read a code symbol in accordance with another type of scanner. For example, the handy scanner 160 may be a type of scanner that reads a code symbol by causing a CCD to receive reflected light from the code symbol.

The card reader/writer 170 is a device that reads information stored in a card-type storage medium and writes information to such a card-type storage medium. The card-type storage medium can be used for purposes of settlement. In some examples, the card-type storage medium can be a credit card.

The signal lamp 180 is a lamp that notifies a store staff that an abnormality has occurred in the self-POS terminal 1.

The self-POS terminal 1 includes a stationary scanner (including the imaging unit 140) and also a handy scanner 160. The stationary scanner cannot always read a code symbol due to certain issues in some cases. For example, when the reading window 141 becomes dirty, the stationary scanner cannot successful read a code symbol in some cases even though the code symbol can be still detected in an image of the commodity. In this case, the handy scanner 160 can likely still read the code symbol of the commodity because the reading window 141 is not related to the operation of the handy scanner 160. That is, even when the stationary scanner fails to read the code symbol, the handy scanner 160 can usually read the code symbol.

The self-POS terminal 1 in this example is assumed to be operated by a customer. A customer is typically inexperienced in the operation of the self-POS terminal 1 may not be aware of the handy scanner 160 or aware that even when the stationary scanner fails to read the code symbol the handy scanner 160 may still be able to read the code symbol. That is, the operator inexperienced in the operation cannot readily determine how to deal with such a circumstance of a failed code symbol reading attempt. Accordingly, the self-POS terminal 1 of the present embodiment guides the operator to utilize another reading method, such as the handy scanner 160.

Next, hardware configurations of various devices included in the self-POS terminal 1 will be described.

FIG. 2 is a block diagram illustrating an example of a hardware configuration of the self-POS terminal 1. The self-POS terminal 1 includes a control unit 101, a memory 102, a communication unit 103, a deposit and withdrawal unit 110, a display unit 120, a touch panel 121, an imaging unit 140, a printer 150, a handy scanner 160, a card reader/writer 170, and a signal lamp 180. These units are connected to each other via a system bus 104, which may be a data bus or an address bus.

The control unit 101 is a computer that controls an operation of the entire self-POS terminal 1 and realizes various functions of the self-POS terminal 1. The control unit 101 includes a central processing unit (CPU) 105, a read-only memory (ROM) 106, and a random access memory (RAM) 107. The CPU 105 generally controls an operation of the self-POS terminal 1. The ROM 106 is a memory medium that stores various programs or data. The RAM 107 is a memory medium that temporarily stores various programs or various kinds of data. The CPU 105 executes a program stored in the ROM 106, the memory 102, or the like using the RAM 107 as a working area (a job area).

The memory 102 is a storage device such as a hard disk drive (HDD) or a solid-state drive (SSD). The memory 102 stores a control program 108 and a notification flag 109. The notification flag 109 may be stored in another device without being limited to the self-POS terminal 1.

The control program 108 is an operating system or a program that implements the functions of the self-POS terminal 1. The control program 108 includes a program that implements a characteristic function according to the embodiment.

The notification flag 109 is a flag indicating whether notification is necessary or unnecessary. The notification flag 109 becomes valid when the imaging unit 140 (which is a stationary scanner) fails to read a code symbol. The notification flag 109 becomes invalid when the reading of the code symbol with the imaging unit 140 is still possible. The self-POS terminal 1 performs a notification when the notification flag 109 becomes valid. Conversely, the self-POS terminal 1 does not perform a notification when the notification flag 109 becomes invalid.

The communication unit 103 is an interface that communicates with another device via a network.

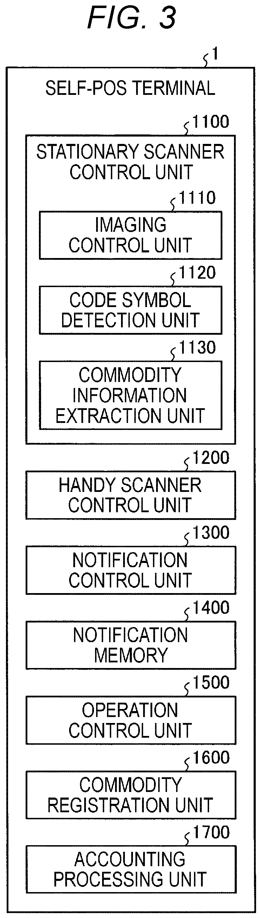

FIG. 3 is a block diagram illustrating a functional configuration of the self-POS terminal 1.

The control unit 101 of the self-POS terminal 1 loads a control program 108 stored in the memory 102 to the RAM 107 and operates in accordance with the control program 108 to generate each depicted functional unit of FIG. 3 on the RAM 107. Specifically, the control unit 101 of the self-POS terminal 1 implements a stationary scanner control unit 1100, a handy scanner control unit 1200, a notification control unit 1300, a notification memory 1400, an operation control unit 1500, a commodity registration unit 1600, and an accounting processing unit 1700 as functional units by execution of the control program 108.

The stationary scanner control unit 1100 controls the stationary scanner such that a code symbol is read. As a result, the stationary scanner control unit 1100 reads commodity information from the code symbol. The stationary scanner control unit 1100 includes an imaging control unit 1110, a code symbol detection unit 1120, and a commodity information extraction unit 1130.

The imaging control unit 1110 controls the imaging unit 140 such that an image is captured. More specifically, the imaging control unit 1110 causes the imaging unit 140 disposed behind the reading window 141 to capture an image under the condition that the notification flag 109 is invalid. Thus, the imaging control unit 1110 captures an image of a commodity held up to the reading window 141. That is, the imaging control unit 1110 captures an image of the code symbol attached to the commodity.

The imaging control unit 1110 causes the imaging unit 140 to stop capturing the image under the condition that the notification flag 109 is valid. Here, when the notification flag 109 is valid, the scanner control unit 1200 controls the handy scanner 160 such that the code symbol is read. That is, the imaging control unit 1110 stops the imaging when the handy scanner control unit 1200 reads the code symbol. Thus, the imaging control unit 1110 prevents the code symbol from being read although it is proven that the code symbol cannot be read.

The code symbol detection unit 1120 detects the code symbol from the image captured by the imaging control unit 1110. More specifically, when the imaging control unit 1110 captures the image, the code symbol detection unit 1120 performs a detection process of detecting the code symbol on the captured image. Thus, the code symbol detection unit 1120 detects the code symbol attached to the commodity from the image.

The commodity information extraction unit 1130 extracts (decodes) the commodity information for identifying the commodity from the code symbol detected by the code symbol detection unit 1120. More specifically, when the code symbol detection unit 1120 detects the code symbol, the commodity information extraction unit 1130 performs a decoding process of decoding the detected code symbol. As a result, the commodity information extraction unit 1130 extracts the commodity information from the code symbol.

The handy scanner control unit 1200 controls the handy scanner 160 such that the code symbol is read. As a result, the handy scanner control unit 1200 extracts the commodity information from the code symbol. More specifically, when the stationary scanner is being utilized for reading the code symbol, the handy scanner control unit 1200 does not attempt to read the code symbol. When the stationary scanner is not being utilized for reading the code symbol, the handy scanner control unit 1200 attempts to reads the code symbol. Specifically, when the notification flag 109 is invalid, the handy scanner control unit 1200 does not perform the reading process for reading the code symbol. Conversely, when the notification flag 109 is valid, the handy scanner control unit 1200 performs the reading process for reading the code symbol. The handy scanner control unit 1200 may also perform the reading process for reading the code symbol even when the notification flag 109 is invalid. For example, when a commodity is heavy, it can be difficult for the operator to hold the commodity up to the reading window 141. Accordingly, when an operation of using the handy scanner 160 is received, the handy scanner control unit 1200 may perform the reading process of reading the code symbol.

When the code symbol detection unit 1120 detects the code symbol, but the commodity information extraction unit 1130 is not successfully extracting the commodity information and a set time elapses, the notification control unit 1300 notifies the handy scanner control unit 1200 such that the reading of the code symbol is allowed. More specifically, when the code symbol detection unit 1120 first detects the code symbol, the notification control unit 1300 measures the time elapsing after the detection of the code symbol. When the code symbol detection unit 1120 has not extracted the commodity information from the detected code symbol before the elapsed time exceeds the set time, the notification control unit 1300 determines that the reading of the code symbol fails.

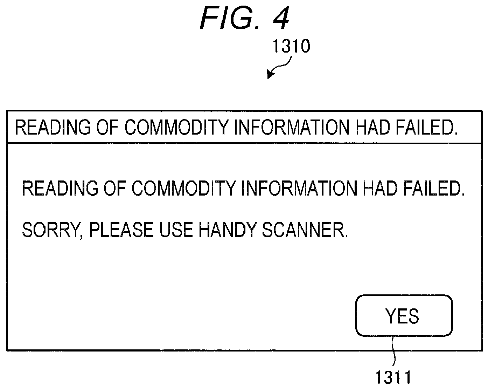

When the notification control unit 1300 determines that the reading of the code symbol fails, the notification control unit 1300 causes the display unit 120 to display a notification screen 1310. Here, FIG. 4 is a diagram illustrating an example of the notification screen 1310. The notification screen 1310 is a screen for notifying the operator to use the handy scanner 160 to read the code symbol. In other words, the notification screen 1310 is a screen for guiding the operator to use the handy scanner 160 since the reading of the commodity information by the stationary scanner has failed. The notification screen 1310 illustrated in FIG. 4 notifies of the reading failure and suggests using of the handy scanner 160 by a message. However, the notification screen 1310 is not limited to a message and the using of the handy scanner 160 may be notified of by a sound, an image, a figure, icon, or the like. The notification screen 1310 includes a YES button 1311. The YES button 1311 is a button for inputting understanding of notification content. The YES button 1311 is a button for indicating an understanding that the code symbol can be read by the handy scanner control unit 1200 instead of the stationary scanner control unit 1100.

The notification control unit 1300 notifies the handy scanner control unit 1200 that the reading of the code symbol is allowed when an extraction failure of commodity information by the commodity information extraction unit 1130 is stored at the time of start of the reading of the commodity information in a transaction. In other words, the notification control unit 1300 notifies the handy scanner 160 that the handy scanner 160 is allowed to read the code symbol when the notification flag 109 is valid at the time of start of the reading of the commodity information in a transaction. Specifically, the notification control unit 1300 causes the display unit 120 to display a message, an icon, an image, or the like for notifying that the handy scanner 160 is available to read the code symbol. The notification control unit 1300 may perform a notification by a sound, by blinking of the signal lamp 180, or another method without being limited to the display unit 120.

The notification memory 1400 causes the notification flag 109 to be valid when the notification control unit 1300 determines that the stationary scanner fails to read the code symbol. In other words, the notification memory 1400 stores the extraction failure of the commodity information within the set time in the commodity information extraction unit 1130. Here, when the commodity information extraction unit 1130 does not extract the commodity information within the set time, the notification control unit 1300 determines that the reading of the code symbol fails and notifies of the failure. In this case, the notification memory 1400 causes the memory 102 to store a notice of the extraction failure by causing the notification flag 109 to become valid. The notification memory 1400 causes the notification flag 109 to be invalid when an operation is received indicating that maintenance work for remedying the reading failure of the code symbol has been performed.

The operation control unit 1500 receives various input operations by controlling the touch panel 121. For example, the operation control unit 1500 receives a reading operation of causing the handy scanner control unit 1200 to read the code symbol. Specifically, the operation control unit 1500 receives the reading operation on the notification screen 1310 for causing the handy scanner control unit 1200 to read the code symbol. That is, the operation control unit 1500 receives an operation of pressing the YES button 1311 of the notification screen 1310.

The commodity registration unit 1600 registers the sale target commodity. More specifically, the commodity registration unit 1600 registers a commodity specified with the commodity information read by the stationary scanner control unit 1100 or the handy scanner control unit 1200 as a sales target commodity.

The accounting processing unit 1700 performs an accounting process for settling payments for the sales target commodities by controlling the deposit and withdrawal unit 110. More specifically, the accounting processing unit 1700 calculates a total price (amount due) of the sales target commodities that have been registered by the commodity registration unit 1600. The accounting processing unit 1700then calculates change due back to the customer after the deposit and withdrawal unit 110 receives a cash payment. Then, the accounting processing unit 1700 causes the deposit and withdrawal unit 110 to eject the bill(s) and/or coin(s) due back as change to the customer.

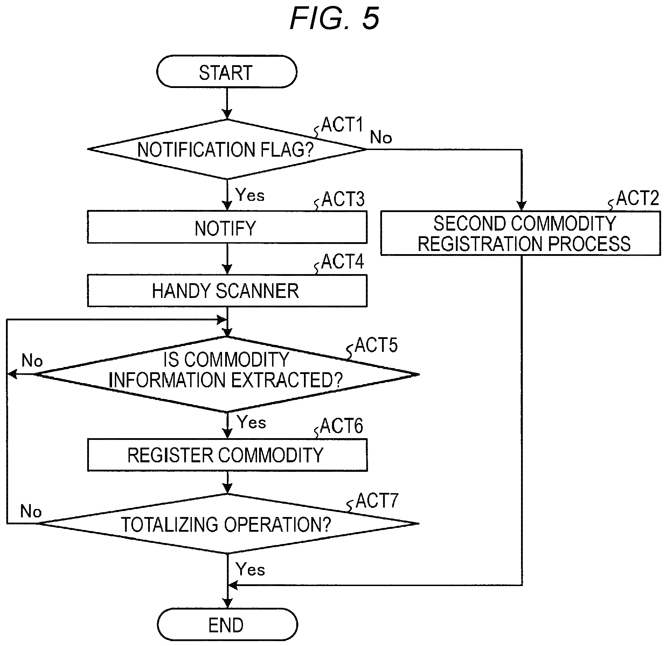

FIG. 5 is a flowchart illustrating an example of a commodity registration process performed by the self-POS terminal 1 according to the embodiment. In this commodity registration process a customer/operator is guided to use the handy scanner 160 when the notification flag 109 is valid at the time of the process start. That is, by this process, the customer is guided to register commodities using the handy scanner 160,, rather than the stationary scanner when the stationary scanner has previously failed to read the commodity information due to a breakdown or the like. The state of the stationary scanner is indicated by the stored notification flag 109.

The notification control unit 1300 determines whether the notification flag 109 is valid (ACT1). When the notification flag 109 is invalid (NO in ACT1), the self-POS terminal 1 performs a second-type commodity registration process (ACT2) to be further described below.

When the notification flag 109 is valid (YES in ACT1), the notification control unit 1300 notifies the user that the stationary scanner cannot read the code symbol (ACT3). Specifically, since the stationary scanner cannot read the code symbol, the notification control unit 1300 causes the display unit 120 to display a message, an icon, or the like for suggesting the use of the handy scanner 160.

The handy scanner control unit 1200 causes the handy scanner 160 to start reading the code symbol (ACT4). Conversely, when the notification flag 109 is valid, the stationary scanner control unit 1100 does not read the code symbol.

The handy scanner control unit 1200 determines whether the commodity information has been extracted by reading the code symbol (ACT5). When the commodity information is not extracted (NO in ACT5), the handy scanner control unit 1200 continues to attempt to extract the commodity information in ACT5.

When the commodity information is successfully extracted (YES in ACT5), the commodity registration unit 1600 registers the commodity that has been identified by the extracted commodity information as a sales target commodity (ACT6).

The operation control unit 1500 determines whether to perform a totalizing process to end the commodity registration process based on a received request or instruction(ACT7). When the totalizing operation request has not been received (NO in ACT7), the self-POS terminal 1 causes the process to return to ACT5.

When the totalizing operation request is received (YES in ACT7), the self-POS terminal 1 ends the commodity registration process.

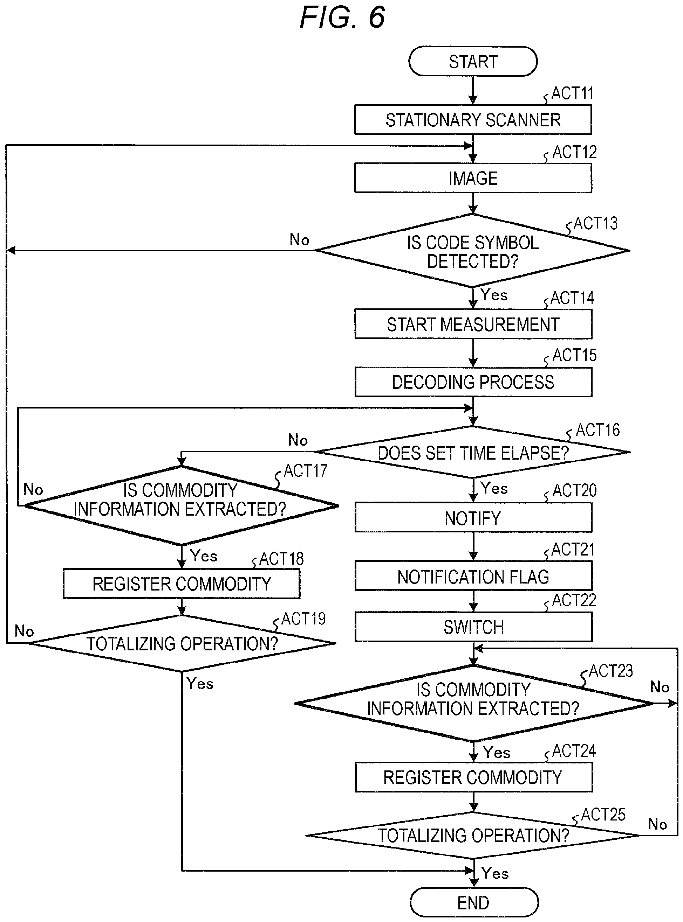

FIG. 6 is a flowchart illustrating an example of the second-type commodity registration process performed (see ACT2) by the self-POS terminal 1 according to the embodiment. The second-type commodity registration process is a process of guiding a customer/operator to register commodities using the handy scanner 160 when the stationary scanner fails after the start of a commodity registration process.

Initially, stationary scanner control unit 1100 causes the stationary scanner to start reading the code symbols (ACT11).

The imaging control unit 1110 causes the imaging unit 140 to capture an image (ACT12). The code symbol detection unit 1120 determines whether the code symbol can be detected from the image captured by the imaging control unit 1110 (ACT13). When the code symbol is not detected (NO in ACT13), the imaging control unit 1110 returns to ACT12 and causes the imaging unit 140 to capture an image again.

When the code symbol is detected (YES in ACT13), the notification control unit 1300 starts measuring a time elapsed since the detection of the code symbol (ACT14).

The commodity information extraction unit 1130 performs a decoding process for decoding the detected code symbol (ACT15).

The notification control unit 1300 determines whether the set time has elapsed since the detection of the code symbol (ACT16). When the set time has not elapsed (NO in ACT16), the commodity information extraction unit 1130 determines whether the commodity information has been extracted in the decoding process (ACT17). When the commodity information has been not extracted (NO in ACT17), the self-POS terminal 1 causes the process to return to ACT16.

When the commodity information is extracted (YES in ACT17), the commodity registration unit 1600 registers the commodity identified by the extracted commodity information(ACT18).

The operation control unit 1500 determines whether the totaling process request has been received to end the commodity registration (ACT19). When the totalizing operation request is not yet received (NO in ACT19), the self-POS terminal 1 causes the process to return to ACT12.

When the totalizing operation request is received (YES in ACT19), the self-POS terminal 1 ends the second-type commodity registration process.

If the set time elapses in ACT16 without extraction of commodity information from the detected code symbol(YES in ACT16), the notification control unit 1300 performs a notification by displaying the notification screen 1310 (ACT20). The notification memory 1400 also sets the notification flag 109 to be valid (ACT21).

The self-POS terminal 1 next switches away from reading the code symbol with the stationary scanner (ACT22). Specifically, the stationary scanner control unit 1100 ends the attempted reading of code symbols and the handy scanner control unit 1200 starts attempting to reading code symbols.

The handy scanner control unit 1200 determines whether the commodity information has been extracted after reading of a code symbol (ACT23). When the commodity information has not been extracted (NO in ACT23), the handy scanner control unit 1200 continues attempting to extract the commodity information (repeats ACT23 processing).

When the commodity information is successfully extracted (YES in ACT23), the commodity registration unit 1600 registers the commodity identified by the extracted commodity information (ACT24).

The operation control unit 1500 determines whether to a totalizing process request has been received to end the commodity registration (ACT25). When the totalizing operation request is not received (NO in ACT25), the self-POS terminal 1 causes the process to return to ACT23.

When the totalizing operation request is received (YES in ACT25), the self-POS terminal 1 ends the second-type commodity registration process.

As described above, the self-POS terminal identifies that the reading of the code symbol has failed when the set time elapses without the extracting of commodity information after the code symbol detection unit 1120 detects the code symbol. In this case, the self-POS terminal 1 notifies a user that the handy scanner 160 can still be used to read the code symbol instead of the failed stationary scanner. Accordingly, the self-POS terminal 1 can guide the operator to another code reading method.

A program executed by each device according to the foregoing embodiment or example can be stored in advance in a storage medium (a ROM or a memory) of the device or device(s), but the present disclosure is not limited thereto. For example, such a program or programs may be provided by being recorded on a non-transitory computer-readable recording medium such as a CD-ROM, a flexible disc (FD), a CD-R, a digital versatile disk (DVD) in an installable format or an executable format. Further, the program(s) may be provided from a server or other computer via, or across, a LAN, the Internet, or the like.

The program(s) executed in each device according to the foregoing may be stored on a computer connected to a network and operated or downloaded via a network for provision.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A commodity reading device, comprising:
a hand-held scanner configured to read a code symbol on a commodity;
a fixed scanner configured to read a code symbol on a commodity by capturing an image of the code symbol;
a processor configured to:
detect the code symbol in the image captured by the fixed scanner,
extract commodity information for identifying the commodity from the detected code symbol, and
provide a notification to a user when a time between the detection of the code symbol and the extracting of the commodity information exceeds a preset threshold length of time, the notification indicating that the hand-held scanner is available to read the code symbol.

2. The commodity reading device according to claim 1, further comprising:
a display screen, wherein
the notification provided by the processor causes the display screen to display a message to the user.

3. The commodity reading device according to claim 2, further comprising:
a signal lamp, wherein
the notification provided by the processor further causes the signal lamp to signal a malfunction of the fixed scanner.

4. The commodity reading device according to any one of claims 1 to 3, further comprising:
a memory configured to store a flag value indicating a previous failure of the extraction of the commodity information, wherein
the processor is further configured to provide a notification, based on the stored flag value, to a user in a subsequent transaction indicating that the fixed scanner is inoperable and the hand-held scanner is available for reading a code symbol.

5. The commodity reading device according to any one of claims 1 to 4, wherein the processor is further configured to register a commodity for sale in a sales transaction based on commodity information extracted from a code symbol.

6. A self-service point-of-sales terminal, comprising:
a display screen configured to be viewed by a customer registering items in a sales transaction; and
a commodity reading device according to any one of claims 1 to 5, wherein
the processor is further configured to:
provide a notification on the display screen when a time between the detection of the code symbol and the extracting of the commodity information exceeds a preset threshold length of time, the notification indicating that the hand-held scanner is available to read the code symbol.

7. The self-service point-of-sales terminal according to claim 6, further comprising:
a card reader/writer for receiving transaction settlement payments from the customer.

8. A commodity reading method for a commodity device with a fixed scanner and a hand-held scanner, the method comprising:
capturing an image of a code symbol on a commodity using a fixed scanner;
detecting the code symbol in the captured image;
attempting to extract commodity information for identifying the commodity from the detected code symbol detected; and
provide a notification to a user when a time between the detection of the code symbol and the extracting of the commodity information exceeds a preset threshold length of time, the notification indicating that a hand-held scanner is available to read the code symbol.

9. The commodity reading method according to claim 8, wherein the notification is displayed on a display screen of the commodity reading device.

10. The commodity reading method according to claim 9, further comprising:
causing a signal lamp to signal a malfunction of the fixed scanner when the notification is provided.

11. The commodity reading method according to any one of claims 8 to 10, further comprising:
storing a flag value indicating a previous failure of the extraction of the commodity information.

12. The commodity reading method according to claim 11, further comprising:
providing a notification, based on the stored flag value, to a user in a subsequent transaction indicating that the fixed scanner is inoperable and the hand-held scanner is available for reading a code symbol.

13. The commodity reading method according to any one of claims 8 to 12, further comprising:
registering a commodity for sale in a sales transaction based on commodity information extracted from a code symbol.
